# EUROPEAN PATENT APPLICATION

(11) **EP 4 730 279 A2**
(43) Date of publication of application: **22.04.2026**
(21) Application number: 26163186.5
(22) Date of filing: 21.06.2023
(51) Int. Cl.: G06V 30/32

(54) **A METHOD FOR PROCESS GRAPHIC SMART DESIGN**

(62) Divisional of application: 23180529.2
(71) Applicant: ABB Schweiz AG, 5400 Baden (CH)
(72) Inventor: DONZELLA, Fabio, 16132 Genova (IT); COSTA, Elisa, 16157 Genova (IT)
(74) Representative: Kransell & Wennborg KB

(57) **Abstract**

The present invention generally relates to a computer-implemented method to insert components (116, 118, 120) into a process graphic (120) of an industrial automation system, the method comprising: receiving (S102) a data signal indicating a drawing input (112) in a working area (114) of a graphical platform shown on a computer display; identifying (S104) the working area (114) of the drawing input; identifying (S106) at least one characteristic of the drawing input, predicting (S108) at least one candidate component from a list of available components (116, 118, 120) stored in a data storage (108) that best matches the at least one characteristic of the drawing input, and providing (S110) a list of the at least one candidate component on the computer display.

## Description

### Field of the Invention

The present invention generally relates to a computer-implemented method to insert components into a process graphic of an industrial automation system. The present invention further relates to a control unit, a system, and a computer program product.

### Background

In industrial automation, process graphics are used as a tool to visually represent components of a plant. Currently, such process graphics are engineered with desktop dedicated tools to manually draw components of the plant.

Manually drawing the components leads to a slow process for completing a graphic of an entire plant which typically involves a high number of components of different complexity.

Some possible process graphic systems involve predefined components that may be customized and inserted from a selection database. However, a drawback is that there may be a high number of customized and/or predefined components that are difficult to distinguish and retrieve for correct use.

Accordingly, there is room for improvements with regards to process graphics for industrial plants.

### Summary

In view of the above-mentioned and other drawbacks of the prior art, it is an object of the present invention to provide a method that can predict a next component in a present process graphics, whereby the method at least partly alleviates drawbacks of prior art.

According to a first aspect of the invention, there is provided a computer-implemented method to insert components into a process graphic of an industrial automation system, the method comprising: receiving a data signal indicating a drawing input in a working area of a graphical platform shown on a computer display; identifying a working area of the drawing input; identifying at least one characteristic of the drawing input, predicting at least one candidate component from a list of available components stored in a data storage that best matches the at least one characteristic of the drawing input, and providing a list of the at least one candidate component on the computer display.

The present invention is at least partly based on the realization to utilize prediction algorithms to predict the component that the user is presently drawing in the graphical platform, i.e., a digital drawing board on the screen. Once at least one candidate component is predicted, it or they can be provided as suggested components of the user who may select a component from the suggested components. In this way, completing a process graphic can be made faster and easier than with prior art solutions.

A process graphic is a graphical representation of a plant or an industrial automation system. Such process graphic is used for visualizing the components in the industrial automation system. The components may be any component, for the sake of exemplification only, a component may be a valve, a relay, a switch, a pipe, processing circuitry, communication lines, wiring, power tools, robotic devices, rolling mills, etc.

The data signal comprises information of a presently drawn input in the process graphics. For example, the signal may include coordinates of a drawn line so that the shape of the drawn line can be determined and evaluated.

The working area is a sub-part or sub-area of the process graphics that encloses the drawing input. The working area may be a crop of the drawing input.

In embodiments, the method may comprise receiving a signal indicating a selection of a component from the list of the at least one candidate component and replacing the drawing input with the selected candidate component in the working area. In other words, the user does not have to complete drawing the component. Instead, once at least one candidate component is predicted and subsequently selected, it automatically replaces the partially drawn component in the working area.

A drawing input is a partially completed drawing of a component of the industrial automation system that is intended to be inserted into the presently opened process graphic.

In embodiments, the method may comprise obtaining data indicating technical requirements of the industrial automation system, wherein predicting the at least one candidate component includes finding at least one candidate component that fulfill the technical requirements. This advantageously reduces the number of available candidate components and thus provides for faster prediction and selection. Technical requirements may be for example electric current or voltage ratings, pressure ratings, dimensions of components, etc.

In embodiments, the step of predicting may comprise evaluating the components already included in the presently working process graphic, and predicting the at least one candidate component that functionally matches the already included components in the process graphics. In other words, components that are incompatible with components already in the presently open process graphics may advantageously be disregarded in the prediction.

In embodiments, the method may comprise accessing selection history of candidate components, wherein the step of predicting comprises evaluating the selection history for predicting the at least one candidate component. That is, the prediction may be based on user history including prior selected candidate components to predict the candidate components more accurately.

In embodiments, providing, once a candidate component is selected, a list of selectable available configurations of the selected candidate component.

In embodiments, the method may comprise predicting, once a candidate component is selected, a set of additional elements of the industrial automation system that are functionally connectable with the selected candidate component and inserting one of the additional elements in the process graphic shown on the computer display. In other words, elements that are connectable with a selected candidate component may be predicted based on the selected candidate component and shown as suggested next element to be inserted in the process graphics. The at least one predicted additional element may be displayed on the display screen as an overlay in the process graphic. This improves the user friendliness of the proposed solution. To be functionally connectable means that the components are compatible to work together or to be fitted together.

In embodiments, the method may comprise providing a machine learning recognition algorithm; processing the drawing input in the machine learning recognition algorithm to predict the at least one candidate component. Using a machine learning algorithm improves the predictions and also allows for continuously improving the predictions as the algorithm is used. That is, the method may comprise performing training steps of the machine learning recognition algorithm using data of historical component selections.

The machine learning algorithm may be part of a content-based filtering recommender system. More specifically, cluster analysis may be considered with a proper usage of a K-means algorithm. An initial analysis of the drawing input may be based on a perception Al area of the of the recommender system, which may be a combination of image recognition and deep learning neural networks, for example convolutional neural networks to analyze the drawings input. Predicting the at least one candidate component may subsequently be performed using the cluster analysis with usage of a K-means algorithm in the recommender system to produce improved results. That is, a combination of a convolutional neural network and a K-means algorithm with cluster analysis combined may provide the best possible suggested industrial automation item for the user with the other inputs already mentioned, such as drawing input of the item, system configuration, user history and process graphics available in the system. The cluster analysis may take the output of the convolutional neural network as input.

In embodiments, the drawing input may be received from a user input interface including at least one of a touch screen interface, a graphic board interface, a keyboard, and a mouse device.

Preferably, the at least one characteristic of the drawing input may include the shape of the drawing input.

According to a second aspect of the invention, there is provided a control unit configured to perform the steps of any one of the herein disclosed methods.

Further effects and features of the second aspect of the invention are largely analogous to those described above in connection with the first aspect of the invention.

According to a third aspect of the invention, there is provided a system comprising a computer display and a control unit according to the second aspect.

Further effects and features of the third aspect of the invention are largely analogous to those described above in connection with the first aspect and the second aspect of the invention.

According to a fourth aspect of the invention, there is provided a computer program product comprising a computer readable medium having stored thereon computer program code for insert components into a process graphic of an industrial automation system, wherein the computer program product comprises: code for receiving a data signal indicating a drawing input in a working area of a graphical platform shown on a computer display; code for identifying a working area of the drawing input; code for identifying at least one characteristic of the drawing input, code for predicting at least one candidate component from a list of available components stored in a data storage that best matches the at least one characteristic of the drawing input, and code for providing a list of the at least one candidate component on the computer display.

The computer readable medium may be a non-transitory computer-readable storage medium.

Further effects and features of the fourth aspect of the invention are largely analogous to those described above in connection with the first aspect, the second aspect, and the third aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 illustrates a system according to an embodiment of the invention;
Fig. 2 is a flow-chart of method steps according to embodiments of the present invention;
Fig. 3 illustrates a process graphics according to an embodiment of the invention;
Fig. 4 is a flow-chart of method steps according to embodiments of the present invention; and
Fig. 5 illustrates a process graphics according to an embodiment of the invention.

### Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

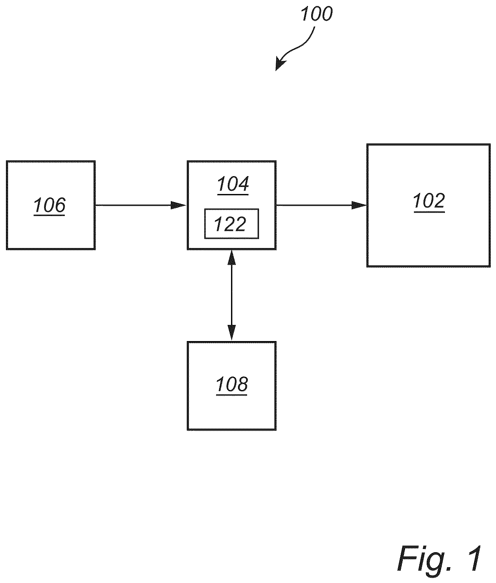

Fig. 1 illustrates a system 100 comprising a computer display 102 and a control unit 104. The control unit 104 is connected to the display 102 to control what is shown on the display 102. The connection may be wireless or via a cable such as HDMI, VGA, USB, or similar.

Furthermore, the system 100 comprises a user input interface 106 and a data storage 108.

The control unit 104 is connected, wirelessly or via a cable, to the user input interface 106 to receive instructions that can be processed by the control unit 104. The user input interface 106 may include at least one of a touch screen interface, a graphic board interface, a keyboard, and a mouse device.

The data storage 108 may be an on-site data storage such as a local hard drive or SD-card, or the data storage 108 may be a cloud-based service, that is, a data storage on a server.

Wireless communication may be though e.g., Wi-Fi, blue tooth, or cellular networks.

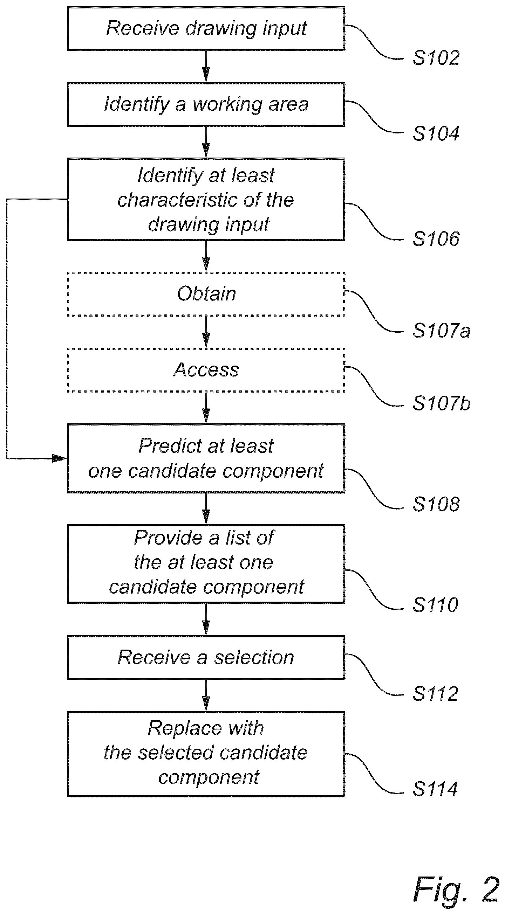

Fig. 2 is a flow-chart of method steps according to embodiments of the present invention. The computer-implemented method is for inserting components into a process graphic of an industrial automation system.

In step S104, receiving, by the control unit 104, a data signal indicating a drawing input in a working area of a graphical platform shown on a computer display 102. The drawing input may be received from the user input interface 106 maneuvered by a user.

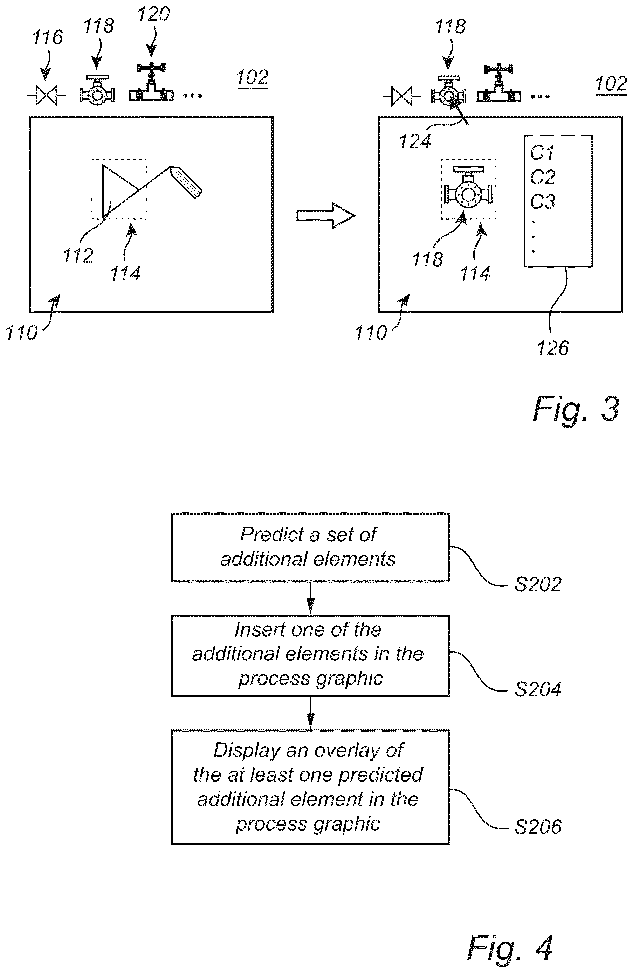

Fig. 3 illustrates an example process graphics 110 shown on a display 102. A user has provided a drawing input 112 in the form of a simple shape in an attempt to draw a component of the intended industrial automation system.

In step S104, identifying, by the control unit 104, a working area 114 of the drawing input. The working area 114 is the immediate area surrounding the drawing input 112, such as a crop of the working area or predetermined size to fit the components that are to be inserted.

In step S106, identifying, by the control unit 104, at least one characteristic of the drawing input 112. A characteristic of the drawing input may for example include the shape or shapes of the drawing input. The shapes may be determined by finding and evaluating, by the control unit 104, the coordinates of the drawing input 112 using e.g., shape recognition, or other machine learning algorithms.

In step S108, predicting, by the control unit 104, at least one candidate component from a list of available components stored in the data storage 108 that best matches the at least one characteristic of the drawing input 112. The control unit 104 may employ an algorithm that takes the drawing input 112 as input and evaluates the drawing input 112 in view of graphical representations of available components stored in the data storage 108. As shown in fig. 3, a set of candidate components 116, 118, 120 are predicted, and provided as a list on the computer display 102, in step S110. The list may be considered a visual representation and not necessarily a list *per* se.

Preferably, a machine learning recognition algorithm 122 is provided. Thus, the control unit 104 employs the machine learning recognition algorithm 122 and processes the at least partial drawing 112 in the machine learning recognition algorithm to predict the at least one candidate component 116, 118, 120. Using a machine learning algorithm that has trained to find the at least one candidate component that best matches the drawing input 112 vastly improves the predictability and accuracy of the method.

The machine learning algorithm may utilize cluster analysis usage of the K-means algorithm. Moreover, a combination of image recognition and deep learning neural networks, such as convolutional neural networks, in a recommender system may further be used. These two techniques combined may provide the best possible suggested component for the user with inputs such as drawing input of the item, system configuration, user history and process graphics available in the system. In a suggested architecture, a convolutional neural network may be used as a perception Al to analyze the drawing input to predict the intended shape of the drawing input, and a k-means algorithm may be sued to predict the candidate component.

Training data are obtained by fetching existing graphics during an initial training phase where an engineer, or other user, draws some pre-defined elements in order to train the machine learning network.

In other words, the machine learning algorithms 122 are configured to foresee the most probable element or component that the operator is trying to represent, matching the sketch 122 drawn with a list of industrial automation items available in the system and stored in the data storage 108.

The identified working area 114, is analyzed, at runtime, to process the sketch 122 drawn in this specific area, extrapolate the main characteristics thereof and provide a list of possible matches, i.e.., a subset of all existing process graphics items available in the system. The prediction may consider the components already available in the system, the context of the specific configuration of the system, based on the plant requirements, and the user selection history. In absence of data about history and context, the system can be configured to show a set of "symbols" provided by some specific standards.

Preferably, the control unit 106 may perform training of the machine learning recognition algorithm 122 using data of historical component selections to continuously improve its predictions.

In step S112, receiving, by the control unit 104, a signal indicating a selection of a component 118 from the list of the at least one candidate component 116, 118, 120. As shown in fig. 3, the user selects the component 118 using the user input interface 106 represented by arrow 124. In this case, the component 118 is a valve.

In step S112, the control unit 104 replaces the at least partial drawing 112 with the selected candidate component 118 in the working area 114.

To improve the predictions, the step S108 of predicting may further comprise evaluating the components already included in the process graphic 110. For example, the component 118 is now included in the process graphic 110 in fig. 3. When a further drawing input is received, the control unit 104 may predict, in step S108, the next component based on which of the components in the stored set of components that that functionally matches the already included component(s) 118. A functional match is components that can operate together cooperatively in a system in a compatible way.

Optionally, the control unit 104 may obtain, in step S107a data indicating technical requirements of the industrial automation system. In such case, the step S108 further includes predicting the at least one candidate component 116, 118, 120 by finding at least one candidate component 118 that fulfill the technical requirements of the drawn industrial automation system. That is, the control unit 104 and its prediction algorithm may take into account the configuration of the industrial automation system that is being drawn when predicting the component.

In a further optional step that may be included in the training of the machine learning algorithm, is step S107b, in which the control unit 104 accesses selection history of candidate components. In this case, the step S108 of predicting comprises evaluating the selection history for predicting the at least one candidate component. The selection history may be stored on the data storage 108 and may be used as a further input to the machine learning algorithm 122. The selection history includes components selected during the creation of the process graphics.

Once a candidate component 118 is selected, shown in fig. 3, the control unit 104 may providing a list 126 of selectable available configurations C1-C3 of the selected candidate component. The configurations relate to functional configurations specific to the selected component. The list 126 may be shown as a drop-down menu on the display next to the selected component.

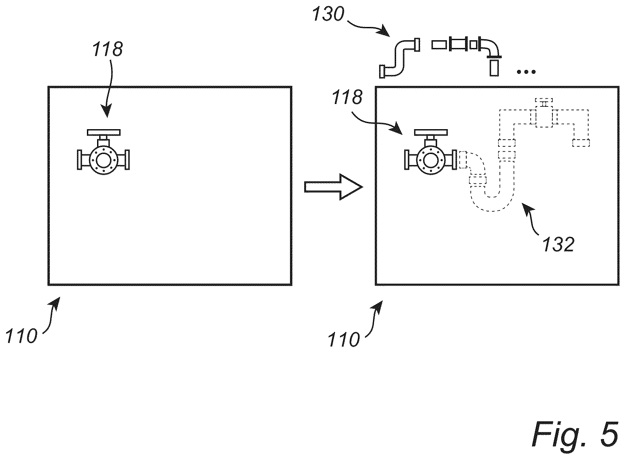

Fig. 4 is a flow-chart of method steps according to embodiments of the present invention. The steps of the flow-chart in fig. 4 are subsequent to the steps of fig. 2. In other words, the steps in fig. 4 are performed once a candidate component 118 is selected. Fig. 5 illustrates the example process graphics 110 shown on the display once a candidate component 118 is selected.

In step S202, predicting, by the control unit 104, once a candidate component is selected, a set of additional elements 130 of the industrial automation system that are functionally connectable with the selected candidate component 118. The additional element 130 are typically connections between candidate components such as tubes, pipes, wiring, etc. The prediction is made by processing data of the selected component 118 in the machine learning algorithm 122 which may be trained to predict additional elements 130 based on the present configuration of the process graphics and the components therein.

In step S204, the control unit 104 inserts one of the additional elements 130 in the process graphic shown on the computer display. In preferred embodiments, the control unit 104 is configured to control the display to show an overlay 132 of the at least one predicted additional element 130 in the process graphic 110 shown on the display screen. That is a set of possible additional elements, "connected" to the selected one, will appear on overlay in the display 102. The operator can then easily extend the graphic 110 with the most used elements according to the same criteria, i.e., technical configurations, other components, and compatibility, and algorithms used for the first drawn component 118, by confirming the insertion of the additional elements 130.

There is further provided a computer program product comprising a computer readable medium having stored thereon computer program code for insert components into a process graphic of an industrial automation system, wherein the computer program product comprises: code for receiving a data signal indicating a drawing input in a working area of a graphical platform shown on a computer display; code for identifying a working area of the drawing input; code for identifying at least one characteristic of the drawing input, code for predicting at least one candidate component from a list of available components stored in a data storage that best matches the at least one characteristic of the drawing input, and code for providing a list of the at least one candidate component on the computer display. The computer program product may be run by the control unit 104.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which correspond to tangible media such as data storage media, or communication media including any media that facilitate the transfer of a computer program from one place to another, e.g., according to a communication protocol. In this manner, computer-readable media generally may correspond to (1) tangible computer-readable storage media which are non-transitory or (2) a communication media such as signal or carrier waves. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A computer-implemented method to insert components (116, 118, 120) into a process graphic (120) of an industrial automation system, the method comprising:
receiving (S102) a data signal indicating a drawing input (112) in a working area (114) of a graphical platform shown on a computer display;
identifying (S104) the working area (114) of the drawing input;
identifying (S106) at least one characteristic of the drawing input;
predicting (S108) at least one candidate component from a list of available components (116, 118, 120) stored in a data storage (108) that best matches the at least one characteristic of the drawing input; and
providing (S110) a list of the at least one candidate component on the computer display;
wherein the method further comprises:
predicting (S202) once a candidate component is selected, a set of additional elements of the industrial automation system that are functionally connectable with the selected candidate component; and
inserting (S204) one of the additional elements in the process graphic shown on the computer display.

2. The computer-implemented method according to claim 1, comprising:
receiving (S112) a signal indicating a selection of a component from the list of the at least one candidate component; and
replacing (S114) the drawing input with the selected candidate component in the working area.

3. The computer-implemented method according to any one of the preceding claims, comprising: obtaining (S107a) data indicating technical requirements of the industrial automation system, wherein predicting the at least one candidate component includes finding at least one candidate component that fulfill the technical requirements.

4. The computer-implemented method according to any one of the preceding claims, wherein the step of predicting comprises:
evaluating the components already included in the process graphic of the industrial automation system; and
predicting the at least one candidate component that functionally matches the already included components.

5. The computer-implemented method according to any one of the preceding claims, comprising:
accessing (S107b) selection history of candidate components, wherein the step of predicting comprises evaluating the selection history for predicting the at least one candidate component.

6. The computer-implemented method according to any one of the preceding claims, comprising:
providing, once a candidate component is selected, a list of selectable available configurations of the selected candidate component.

7. The method of any preceding claim, comprising:
displaying (S206), on the display screen, an overlay of the at least one predicted additional element in the process graphic shown on the display screen.

8. The method according to any one of the preceding claims, comprising:
providing a machine learning recognition algorithm (122);
processing the at least partial drawing in the machine learning recognition algorithm to predict the at least one candidate component.

9. The method according to claim 8, comprising:
performing training of the machine learning recognition algorithm using data of historical component selections.

10. The computer-implemented method according to any one of the preceding claims, wherein the drawing input is received from a user input interface (106) including at least one of a touch screen interface, a graphic board interface, a keyboard, and a mouse device.

11. The computer-implemented method according to any one of the preceding claims, wherein the at least one characteristic of the drawing input includes the shape of the drawing input.

12. A control unit (104) configured to perform the steps of any one of the preceding claims.

13. A system comprising a computer display (102) and a control unit according to claim 12.

14. A computer program product comprising a computer readable medium having stored thereon computer program code for insert components into a process graphic of an industrial automation system, wherein the computer program product comprises:
code for receiving a data signal indicating a drawing input in a working area of a graphical platform shown on a computer display;
code for identifying a working area of the drawing input;
code for identifying at least one characteristic of the drawing input;
code for predicting at least one candidate component from a list of available components stored in a data storage that best matches the at least one characteristic of the drawing input; and
code for providing a list of the at least one candidate component on the computer display;
wherein the computer program product further comprises:
code for predicting once a candidate component is selected, a set of additional elements of the industrial automation system that are functionally connectable with the selected candidate component; and
code for inserting one of the additional elements in the process graphic shown on the computer display.
